# EUROPEAN PATENT APPLICATION

(11) **EP 4 811 913 A1**
(43) Date of publication of application: **23.09.2026**
(21) Application number: 24895699.7
(22) Date of filing: 29.07.2024
(51) Int. Cl.: H04W 72/50

(54) **CONFIGURATION METHOD, COMMUNICATION APPARATUS, AND STORAGE MEDIUM**

(30) Priority: 28.11.2023 CN 202311625470
(71) Applicant: ZTE Corporation, Shenzhen, Guangdong 518057 (CN)
(72) Inventor: LU, Zhaohua, Shenzhen, Guangdong 518057 (CN); LIU, Kun, Shenzhen, Guangdong 518057 (CN)
(74) Representative: Ziebig Hengelhaupt Intellectual Property Attorneys Patentanwaltskanzlei PartGmbB
(86) International application number: PCT/CN2024/108210
(87) International publication number: WO 2025/112596

(57) **Abstract**

Provided are a configuration method, a communication apparatus, and a storage medium. The configuration method comprises: sending configuration information, wherein the configuration information comprises at least one of the following: information of a first capability; activation time configuration information corresponding to the first capability; information of a first function, the first function being a function that needs to be activated by a second node; information of a second function, the second function being a function that needs to be deactivated by the second node; first indication information, the first indication information being used for indicating that the second node reports a second capability; and first trigger condition information, the first trigger condition information being used for triggering the second node to report the second capability.

## Description

The present disclosure claims a priority of Chinese Patent Application No. 202311625470.2, filed on November 28, 2023, the entire content of which is incorporated into the present application by reference.

### TECHNICAL FIELD

The present disclosure relates to the field of communication technologies, and in particular, to a configuration method, a communication apparatus, and a storage medium.

### BACKGROUND

A wireless communication system is widely used in people's daily lives and production. For example, the wireless communication system is applied to video transmission, voice transmission, positioning, machine-to-machine communication in an industrial field, device-to-device communication, and communication between vehicles and other devices in the Internet of Vehicles. Furthermore, more and more extensive applications also put forward higher and higher requirements for the transmission reliability, capacity, transmission rate, etc., of wireless communication technology, and also promote the rapid development of wireless communication field.

### SUMMARY

In a first aspect, the embodiments of the present disclosure provide a configuration method, and the configuration method includes:
sending configuration information;
where the configuration information includes at least one of: information of a first capability; activation time configuration information corresponding to the first capability; information of a first function, where the first function is a function required to be activated by a second node; information of a second function, where the second function is a function required to be deactivated by the second node; first indication information, where the first indication information is used to instruct the second node to report a second capability; first trigger condition information, where the first trigger condition information is used to trigger the second node to report the second capability.

In a second aspect, the embodiments of the present disclosure provide another configuration method, and the configuration method includes:
receiving configuration information sent from a first node;
where the configuration information includes at least one of: information of a first capability; activation time configuration information corresponding to the first capability; information of a first function, where the first function is a function required to be activated by a second node; information of a second function, where the second function is a function required to be deactivated by the second node; first indication information, where the first indication information is used to instruct the second node to report a second capability; first trigger condition information, where the first trigger condition information is used to trigger the second node to report the second capability.

In a third aspect, the embodiments of the present disclosure provide a communication apparatus. The communication apparatus includes:
a sending module, configured to send configuration information. The configuration information includes at least one of: information of a first capability; activation time configuration information corresponding to the first capability; information of a first function, where the first function is a function required to be activated by a second node; information of a second function, where the second function is a function required to be deactivated by the second node; first indication information, where the first indication information is used to instruct the second node to report a second capability; first trigger condition information, where the first trigger condition information is used to trigger the second node to report the second capability.

In a fourth aspect, the embodiments of the present disclosure provide another communication apparatus. The communication apparatus includes:
a receiving module, configured to receive configuration information;
where the configuration information includes at least one of: information of a first capability; activation time configuration information corresponding to the first capability; information of a first function, where the first function is a function required to be activated by a second node; information of a second function, where the second function is a function required to be deactivated by the second node; first indication information, where the first indication information is used to instruct the second node to report a second capability; first trigger condition information, where the first trigger condition information is used to trigger the second node to report the second capability.

In a fifth aspect, the embodiments of the present disclosure further provide a communication apparatus. The communication apparatus includes: a memory and a processor; the memory is coupled with the processor; the memory is configured to store instructions executable by the processor; and the processor, upon executing the instructions, performs any one of the methods provided in the first aspect or the second aspect.

In a sixth aspect, the present disclosure provides a computer program product containing computer instructions, and the computer instructions, upon being executed on a computer, enable the computer to perform any one of the methods provided in the first aspect or the second aspect described above.

### BRIEF DESCRIPTION OF THE DRAWINGS

FIG. 1 is a schematic diagram of an architecture of a communication system according to some embodiments.
FIG. 2 is a schematic flowchart of a configuration method according to some embodiments.
FIG. 3 is a schematic flowchart of another configuration method according to some embodiments.
FIG. 4 is a schematic flowchart of yet another configuration method according to some embodiments.
FIG. 5 is a schematic flowchart of yet another configuration method according to some embodiments.
FIG. 6 is a schematic flowchart of yet another configuration method according to some embodiments.
FIG. 7 is a schematic diagram of components of a communication apparatus according to some embodiments.
FIG. 8 is a schematic diagram of components of another communication apparatus according to some embodiments.
FIG. 9 is a structural schematic diagram of a communication apparatus according to some embodiments.

### DETAILED DESCRIPTION

The technical solutions in the embodiments of the present disclosure will be described clearly and completely below in conjunction with the drawings in the embodiments of the present disclosure. Obviously, the described embodiments are only a part of the embodiments of the present disclosure, not all of the embodiments. Based on the embodiments in the present disclosure, all other embodiments obtained by those ordinary skilled without creative efforts shall fall within the protection scope of the present disclosure.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more. Expressions, such as "first" and "second", etc., do not limit the number and execution order, and the expressions, such as "first" and "second", etc., also do not necessarily limit different items.

It should be noted that in the present disclosure, the expressions such as "exemplary/exemplarily" or "for example" are used to present an example, illustration, or explanation. Any embodiment or design scheme described with "exemplary/exemplarily" or "for example", etc., in the present disclosure should not be construed as preferred or advantageous over other embodiments or design schemes. Rather, the usage of the expressions, such as "exemplary /exemplarily" or "for example", etc., is intended to present relevant concepts in a detailed manner.

A wireless communication system is widely applied to people's daily lives and production. The 5th generation mobile communication system (5G) is applied to fields such as smartphones, the Internet of Things, and the industrial Internet, etc. The large-scale application of 5G new radio (NR) accelerates and promotes the transformation of the economy and society towards digitalization, networking, and intelligence, driving networks into a new era of the Internet of Everything. Moreover, the rapidly emerging application requirements in aspects such as smart cities, smart transportation, and smart industrial production, etc., have made the development trends of differentiated network device capabilities, diversified network functions, and intelligent network management and control continuously enhanced, further driving the arrival of the 6th generation mobile communication system (6G) for the Intelligent Connection of Everything. In 6G typical application scenarios represented by smart cities, smart transportation, and smart homes, there are a large number of intelligent automated devices with highly differentiated capabilities, which impose increasingly stringent communication requirements on aspects such as ultra-low latency, ultra-high reliability, ultra-large bandwidth, and massive access. Intelligent automation type applications also raise requirements such as high precision and high resolution, etc., for sensing capabilities. On the one hand, the explosive growth in the number of wireless communication and sensing devices has intensified the contradiction between the endless growth of service demands and the limited wireless resources and computing capability. On the other hand, the implementation of the 6G vision requires, with the aid of the acquisition of environmental sensing information, information interaction and sharing, intelligent information processing, and the closed-loop information flow processing of the layer-by-layer distribution of control information (including control information for communication networks and control instructions for application execution devices). That is, it is already difficult to satisfy the continuously emerging application requirements.

Currently, artificial intelligence (AI) technologies may be widely applied to wireless communication systems. AI technologies are a branch of computer science, possessing self-learning devices, components, functional modules, etc., which are represented by deep learning, reinforcement learning, distributed learning, etc. The AI technologies have a wide and profound impact in a plurality of fields such as communication network optimization, intelligent sensing, and control applications, etc., and have greatly enhanced the possibility of deep integration in the communication field, sensing field and computing field.

Computing power plays a crucial role in the field of AI technologies, may improve accuracy and performance of models, accelerate data processing and analysis, optimize model configuration, enhance performance and efficiency of models, thus driving the development and application of artificial intelligence technology. Computing power refers to the capability of a computer device or a computing model to perform data processing and computation. In application fields such as artificial intelligence, machine learning, and high-performance computing, etc., computing power is one of the key factors for implementing complex computation and data processing. From the perspective of processing objects, the processing objects of computing power are mainly data, including data in various forms such as text, audio, and video, etc. From the perspective of bearing terminals, the implementations of computing power services are mainly implemented through terminals such as servers, personal computers (PCs), and mobile phones, etc.

For training deep learning models, because training deep neural networks requires a large number of computing resources to process large-scale datasets and complex model structures, improving computing power may speed up training speed, thereby improving accuracy and performance of the model. For accelerating data processing and analysis, artificial intelligence applications usually need to process large-scale datasets (including images, text, speech, etc.). Increasing computing power may accelerate data processing and analysis to extract useful features and modes, thereby supporting higher-level artificial intelligence tasks (such as image recognition, natural language processing, and speech recognition, etc.,). For optimizing model configuration, increasing computing power may support optimization search for model hyperparameters to find the best configuration. In addition, increasing computing power may also be used for neural architecture search and automated machine learning workflows to improve performance and efficiency of the model. Furthermore, increasing computing power may also enhance performance and efficiency of the model. For example, the enhancement of computing power may enable the implementation of more complex models, such as large-scale language models and image generation models, which require a large number of computing resources for training and generating high-quality results.

Thus, how to allocate radio resources, for example, how to reasonably allocate computing power of the terminal in efficient radio resource allocation schemes of the terminal, is a technical problem that urgently needs to be solved.

In view of this, the present disclosure provides a configuration method and the configuration method includes: sending configuration information, where the configuration information includes at least one of: information of a first capability; activation time configuration information corresponding to the first capability; information of a first function, where the first function is a function required to be activated by a second node; information of a second function, where the second function is a function required to be deactivated by the second node; first indication information, where the first indication information is used to instruct the second node to report a second capability; first trigger condition information, where the first trigger condition information is used to trigger the second node to report the second capability. And, the first capability may be understood as a capability required to be supported by the second node. Thus, the configuration information may be determined based on an actual requirement of a terminal, a service type, and a radio channel environment, thereby enabling adaptive radio resource allocation based on the actual application condition, improving the utilization efficiency of computing power of the terminal, further implementing efficient radio resource allocation of the terminal, and improving system spectral efficiency.

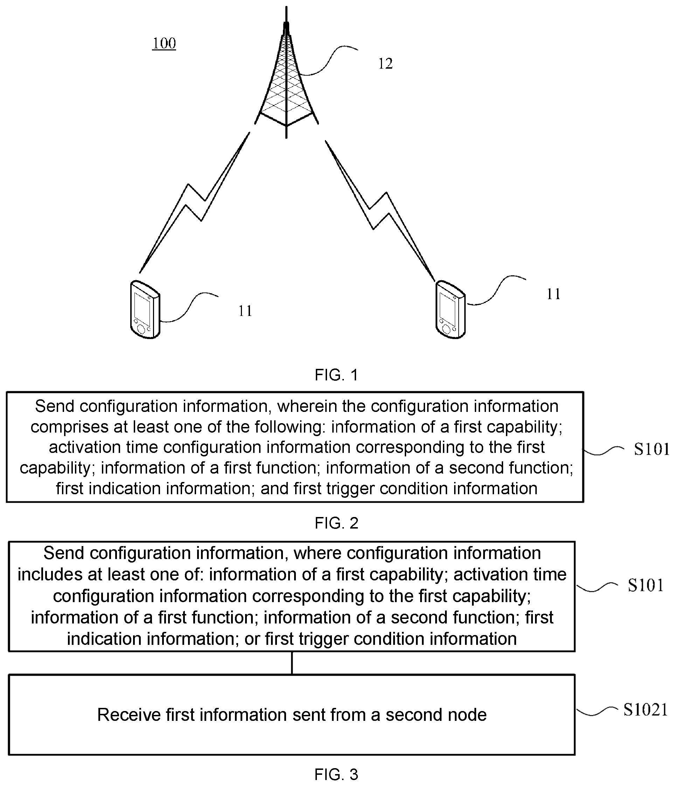

The method provided in the embodiments of the present disclosure may be applied to various communication systems. For example, the communication system may be a long term evolution (LTE) system, a 5G communication system, a Wireless Fidelity (Wi-Fi) system, a 3rd generation partnership project (3GPP)-related communication system, a future evolved communication system (e.g., a 6th generation (6G) communication system, etc.), or a system integrating multiple systems, etc., which is not limited thereto. The following takes a communication system 100 shown in FIG. 1 as an example, to describe the method provided in the embodiments of the present disclosure. FIG. 1 is merely a schematic diagram and does not constitute a limitation on the applicable scenarios of the technical solutions provided in the present disclosure.

FIG. 1 is a schematic diagram of an architecture of a communication system provided by in the embodiments of the present disclosure. As shown in FIG. 1, the communication system 100 may include one or more first nodes 11 and one or more second nodes 12. The second node 12 may be communicatively connected with one or more first nodes 11.

In some embodiments, the first node 11 may be a network device, and the second node 12 may be a terminal device. The network device may be used to implement functions, such as resource scheduling, radio resource management, and radio access control, etc., of terminal devices. For example, the network device 101 may be a base station (evolution nodeB, eNB), a next generation base station (generation nodeB, gNB), a receiving and transmitting point (transmission receive point, TRP), a transmission point (TP), and a certain type of other access node. According to a size of the provided service coverage area, the base station may be classified into a macro base station for providing a macro cell (Macro cell), a micro base station for providing a pico cell (Pico cell) and a femto base station for providing a femto cell (Femto cell). With the continuous evolution of wireless communication technologies, other names for future base stations may be also adopted.

The terminal device may also be referred to as a terminal, a user equipment (UE), a mobile station, a mobile terminal, etc. Exemplarily, the terminal device may be a mobile phone, a tablet computer, a computer with a radio transceiver function, a virtual reality terminal, an augmented reality terminal, a wireless terminal in industrial control, a wireless terminal in unmanned driving, a wireless terminal in remote surgery, a wireless terminal in transportation safety, a wireless terminal in a smart city, a wireless terminal in a smart home, etc. The embodiments of the present disclosure do not limit the device form adopted by the terminal.

In some embodiments, in a communication process, the first node sends data to the second node, and the second node receives the data sent from the first node. Thus, the first node may be referred to as a sending end. Correspondingly, the second node may be referred to as a receiving end. Alternatively, the second node sends data to the first node, and the first node may be referred to as a receiving end. Correspondingly, the second node may be referred to as a sending end.

It should be noted that, FIG. 1 is only an exemplary framework diagram, and a number of devices or nodes and names of the various devices included in FIG. 1 are not limited, and in addition to the functional nodes shown in FIG. 1, the communication system may also include other nodes or devices (such as a core network device).

The system architectures and the service scenarios described in the embodiments of the present disclosure are provided for more clearly explaining the technical solutions of the embodiments of the present disclosure, and do not constitute a limitation on the technical solutions provided in the embodiments of the present disclosure, and the ordinary skilled in the art may know that with the evolution of the network architectures and the emergence of new service scenarios, the technical solutions provided in the embodiments of the present disclosure are also applicable to similar technical problems.

Embodiments provided in the present disclosure are introduced below with reference to the drawings of the specification.

As shown in FIG. 2, the present disclosure provides a configuration method, where the method is applied to a first node and includes: S101.

In S101, configuration information is sent.

The configuration information includes at least one of: information of a first capability; activation time configuration information corresponding to the first capability; information of a first function; information of a second function; first indication information; or first trigger condition information.

The above first function is a function required to be activated by the second node, the second function is a function required to be deactivated by the second node, the first indication information is used to instruct the second node to report a second capability, and the first trigger condition information is used to trigger the second node to report the second capability. Exemplarily, the first node may send the configuration information to the second node.

Each piece of configuration information is explained in detail below.

### (1) Information of the first capability

The first capability may be understood as a capability required to be supported by the second node.

In some embodiments, the information of the first capability may include at least one of: information of a capability required to be supported by the second node; information of a minimum capability required to be supported by the second node; information of a minimum capability configured for the second node; or information of a maximum capability required to be supported by the second node, etc.

In some embodiments, the first capability includes at least one of: a computing capability of the second node, a number of computing units of the second node, a storage capability of the second node or a number of storage units of the second node.

Exemplarily, the first capability may be the computing capability, and a level of the computing capability, i.e., the level of the first capability, supported by the second node may be measured by a number of computing units. For example, the greater the number of computing units, the higher the first capability. Alternatively, the first capability may be the storage capability, and a level of the storage capability (i.e., the first capability), supported by the second node, may be measured by a number of storage units. For example, the greater the number of storage units, the higher the first capability.

In some embodiments, the above computing unit and/or the storage unit is determined based on one of: predefined, defined by the first node, defined by the second node, defined through negotiation between the first node and the second node.

In some embodiments, the information of the first capability includes at least one of: information of a capability required to be supported by the second node; or information of a capability required to be supported by the second node when the second node activates the first function.

Exemplarily, the information of the first capability may be information of a minimum capability, information of a maximum capability, or information of other possible capability values required to be supported by the second node. The information of the first capability may also be information of a maximum capability, information of a minimum capability, or information of other possible capability values required to be supported by the second node when the second node activates the first function. For example, taking an example of computing capability, the information of the first capability includes information of a minimum computing capability required to be supported by the second node, i.e., a minimum value of a number of computing units required to be supported by the second node, which may be represented as N_{Min}.

### (2) Activation time configuration information corresponding to the first capability

In some embodiments, the activation time configuration information corresponding to the above first capability includes at least one of: an activation starting time, an activation deadline, or an activation time period.

Exemplarily, the above activation time may also be referred to as an enabling time, which refers to at least one of a starting time, a deadline, or an enabling time period corresponding to the first capability that may be used or allowed to be used.

In some embodiments, the configuration information further includes at least one of:
information of a capability corresponding to the first function required to be supported by the second node;
activation time configuration information corresponding to the first function;
information of a capability corresponding to the second function required to be supported by the second node;
activation time configuration information corresponding to the second function; or
deactivation time configuration information corresponding to the second function.

In some embodiments, the activation time configuration information corresponding to the above second function may include at least one of activation starting time information, activation deadline information, activation time period information, enabling starting time information, enabling deadline information, or enabling time period information.

In some embodiments, the deactivation time configuration information corresponding to the above second function may include at least one of deactivation starting time information, deactivation deadline information, deactivation time period information, disabling starting time information, disabling deadline information, or disabling time period information corresponding to the second function.

### (3) Information of the first function and information of the second function

In some embodiments, the above function includes at least one of: a service type, an application scenario or a processing manner of a message. That is, the first function may include at least one of: a service type, an application scenario, or a processing manner of a message, and the second function may also include at least one of a service type, an application scenario, or a processing manner of a message.

Exemplarily, the service type may include at least one of service types such as a voice service, a data service, a message service, a location service, an Internet of Things (IoT) service, a multimedia service, and public services such as news and weather forecast, etc. The application scenario may include at least one of application scenarios such as mobile communication, the Internet of Things, industrial automation, smart transportation, and public service, etc. The processing manner of the message includes at least one of: a generation manner, a sending manner, a receiving manner, a manner for carrying information, a content for carrying information, a transmission configuration. It should be understood that, the above descriptions related to the service type, the application scenario, and the processing manner of the message are merely examples, and the first function or the second function may further include other possible contents, which are not limited to the present disclosure.

The above transmission configuration may include a related configuration in a process of a transmission of the message. In some embodiments, a transmission configuration set includes at least one type of transmission configuration. A transmission configuration at least includes the following configuration information: a time-domain resource and/or a frequency-domain resource. It should be understood that, the transmission configuration may also be referred to as a sending configuration or a resource configuration, etc., which is not limited to the present disclosure.

In some embodiments, there is a correspondence between the sending manner and/or the receiving manner of the processing manner of the message and the transmission configuration. A transmission configuration corresponds to a sending manner and/or a receiving manner, and the configuration information in the transmission configuration is understood as configuration information required to support the sending manner and/or the receiving manner.

In some embodiments, the transmission configuration further includes configuration information of at least one of: a reference signal resource, a discrete Fourier transformation (DFT) vector, a signal multiplexing manner, a spatial filter of a first node, coding of a first node, a codeword of coding of a first node, an antenna port of a first node, an antenna weight vector of a first node, an antenna weight matrix of a first node, a spatial filter of a second node, coding of a second node, a codeword of coding of a second node, an antenna port of a second node, an antenna weight vector of a second node, an antenna weight matrix of a second node, an angle of departure (AOD), a zenith angle of departure (ZOD), an angle of arrival (AOA), a zenith angle of arrival (ZOA), a vector or a vector index constructed from at least one of an AOA, an AOD, a ZOD, or a ZOA, or a codeword in a codebook. The reference signal resource includes at least one of: a time-domain resource, a frequency-domain resource, a code-domain resource, or port information of a reference signal. The reference signal includes a sounding reference signal (SRS). The signal multiplexing manner includes at least one of: spatial division multiplexing, time division multiplexing, or frequency division multiplexing.

In some embodiments, the transmission configuration may further include configuration information of at least one of: a sending beam, a sending beam group, sending beam index information, a sending beam group index, a sending beam pair, sending beam number information, sending beam direction information, a receiving beam, a receiving beam group, receiving beam index information, a receiving beam group index, a receiving beam pair, receiving beam index information, receiving beam number information, or receiving beam direction information.

In some embodiments, the transmission configuration may further include configuration information of at least one of: a spatial filter, a spatial receiving parameter, or a spatial transmitting parameter. The spatial filter may include at least one of: a DFT vector, a precoding vector, a DFT matrix, a precoding matrix, a vector constituted by a linear combination of a plurality of DFTs, or a vector constituted by a linear combination of a plurality of precoding vectors.

It should be understood that, the contents included in the above transmission configuration are merely examples; with changes in actual requirements and evolution of the network architecture, the transmission configuration may also include other possible contents, which are not limited to the present disclosure.

### (4) First indication information

The first indication information is used to instruct the second node to report the second capability.

In some embodiments, the second capability may be used to indicate a self capability of the second node. In some embodiments, the information of the second capability includes at least one of:
information of a capability possessed by the second node itself; information of a capability supported by the second node itself; information of a capability configured for the second node; information of a minimum capability possessed by the second node itself; information of a minimum capability supported by the second node itself; information of a minimum capability configured for the second node; information of a maximum capability possessed by the second node itself; information of a maximum capability supported by the second node itself; or information of a maximum capability configured for the second node.

### (5) First trigger condition information

The first trigger condition information is used to trigger the second node to report the second capability. That is, in a condition that the first trigger condition is satisfied, the second node may send the second capability to the first node.

In some embodiments, the first trigger condition information includes at least one of: the second capability being less than a first threshold; the second node being incapable of activating a part or all of the first function; the second capability being less than the first capability; the second node not supporting a part or all of the first function; capability information required to be supported by the second node for activating the first function exceeding a limitation of a capability of the second node; or a difference between capability information supported by the second node and capability information required to be supported by the second node being less than a second threshold.

Exemplarily, the configuration information includes: information (first information) of a minimum capability required to be supported by the second node, activation time configuration information corresponding to the minimum capability required to be supported by the second node, information of a first function, and the first trigger condition information.

The first information may be the minimum capability information N_{Min} required to be supported by the second node UE 1. The maximum computing capability supported by the UE 1 itself, that is, the maximum value of the number of computing units, may be represented as N(UE 1)_{Max}. Furthermore, the first trigger condition information in this example includes N(UE 1)_{Max}-N_{Min}≤Delta2 (a second threshold). The Delta2 may be configured by default or configured by a base station or configured by the UE 1.

In a case where N(UE 1)_{Max}-N_{Min}≤Delta2 is satisfied, the UE 1 sends the information of the capability (that is, the second capability) supported by the UE 1 itself to the first node. In an example, the UE 1 may also send feedback information to the first node, for example, the following first information, and the information of the capability supported by the UE 1 itself is carried in the first information.

In some embodiments, the first node, upon sending the configuration information to the second node, may also receive the feedback information sent from the second node regarding the configuration information. For example, the feedback information received by the first node may include following first information, second information, third information, or other information.

In an implementation, as shown in FIG. 3, the method may further include S1021.

In S1021, first information sent from a second node is received.

In some embodiments, the above first information includes at least one of: acknowledgement information for receiving the configuration information; or second indication information.

Exemplarily, the first information may be understood as feedback information sent from the second node to the first node regarding the above configuration information. That is, the second node, after receiving the configuration information sent from the first node, in a case where the second node determines that a current scenario satisfies a trigger condition of the first information (that is, a following second trigger condition), may send the first information to the first node; and correspondingly, the first node receives the first information.

In some embodiments, the second indication information is used to indicate at least one of: the second node not supporting the first capability; the second node being incapable of providing the first capability; the second node being incapable of activating a part or all of the first function; or the second node not supporting a part or all of the first function.

It can be understood that, in a case where the second node is incapable of supporting the capability (that is, the first capability) that is indicated by the first node and required to be supported by the second node, the first information may be the feedback information sent from the second node to the first node regarding the configuration information, to inform the first node that the capability of the second node cannot satisfy the capability requirement. That is, in a case where the second trigger condition is satisfied, the second node determines that the self capability cannot support the capability indicated by the first node and required to be supported by the second node, and thus, the second node sends the first information to the first node.

In some embodiments, the first information may further include a reason why the second node does not support the first capability.

In some embodiments, the sending trigger condition of the first information may be referred to as a second trigger condition; the second trigger condition includes at least one of: the second capability being less than a third threshold; the second capability being less than the first capability; the second node being incapable of activating a part or all of the first functions; the second node not supporting a part or all of the first functions; a capability required to be supported by the second node for activating the first function exceeding a capability limitation of the second node.

The third threshold may be a reference threshold of a capability determined based on the first capability; in a case where that the second capability is less than the third threshold, the second node may determine that the self capability (that is, the second capability) cannot satisfy the capability required to be supported by the second node.

In some embodiments, the second capability being less than the first capability includes at least one of: a computing capability supported by the second node being less than a computing capability required to be supported by the second node; or a storage capability supported by the second node being less than a storage capability required to be supported by the second node.

In an example, the computing capability supported by the second node being less than the computing capability required to be supported by the second node includes one of: a number of computing units of the second node being less than a number of computing units required to be provided by the second node; or a number of computing units of the second node being less than a sum of a number of computing units required to be provided by the second node and a first preset value.

In some embodiments, the number of computing units required to be provided by the second node is determined according to a minimum value of a number of computing units required for respective functions required to be supported by the second node.

Example 1: the configuration information includes: information of a minimum capability (first capability) required to be supported by the second node, activation time configuration information corresponding to the minimum capability required to be supported by the second node, and information of the first function.

The information of the minimum capability required to be supported by the second node UE 1 includes a minimum value of a computing number required to be supported by the second node, for example, N_{Min}; the first function (that is, a function required to be activated by the second node) includes function A and function B.

In a scenario, N_{Min} > N(UE 1)_{Max}, where N(UE 1)_{Max} is a maximum capability supported by the second node itself, that is, an example of the second capability. At this time, the second capability is less than the first capability, which satisfies the second trigger condition, indicating that the capability of the second node is incapable of supporting the capability indicated by the first node and required to be supported by the second node; at this time, the UE 1 may send the first information to the first node. Furthermore, the second capability is less than the first capability, which also satisfies the above first trigger condition, so the UE 1 may also report the second capability (that is, N(UE 1)_{Max}) to the first node.

The first information may include acknowledgement information for receiving the configuration information and second indication information; the second indication information is used to indicate at least one of: the UE 1 not supporting the first capability (that is, N_{Min}); UE 1 being incapable of providing the first capability (that is, N_{Min}); UE 1 being incapable of activating all or a part of function A and function B; or the UE 1 not supporting all or a part of function A and function B. For example, the UE 1 is incapable of enabling the function A and function B within a time indicated by the "activation time configuration information corresponding to the minimum capability required to be supported by the UE 1" in the configuration information.

In another scenario, N_{Min} + Delta1 > N(UE 1)_{Max}, where N(UE 1)_{Max} is the maximum capability supported by the second node itself, that is, an example of the second capability; a value of a sum of N_{Min} and Delta1 may be a third threshold; at this time, the second capability is less than the third threshold, which satisfies the second trigger condition, indicating that the capability of the second node is incapable of supporting the capability indicated by the first node and required to be supported by the second node; at this time, the UE 1 may send the first information to the first node. Furthermore, the above first trigger condition is also satisfied, so the UE 1 may also report the second capability (that is, N(UE 1)_{Max}) to the first node.

Similarly, the first information may include acknowledgement information for receiving the configuration information and second indication information; the second indication information is used to indicate at least one of: the UE 1 not supporting the first capability (that is, N_{Min}); UE 1 being incapable of providing the first capability (that is, N_{Min}); UE 1 being incapable of activating all or a part of function A and function B; or the UE 1 not supporting all or a part of function A and function B. For example, the UE 1 is incapable of enabling the function A and function B within a time indicated by the "activation time configuration information corresponding to the minimum capability required to be supported by the UE 1" in the configuration information. The Delta1 may be configured by default or configured by a first node or configured by the UE 1.

In yet another scenario, N_{Min} >N(UE 1)_{Max}, and the first information further includes a reason why the second node does not support the first capability. Exemplarily, the UE 1 may send the first information to the first node. The first information may include acknowledgement information for receiving the configuration information and the second indication information, where the second indication information is used to indicate that the UE 1 is incapable of enabling the function A and function B within a time indicated by "activation time configuration information corresponding to a minimum capability required to be supported by the UE 1" in the configuration information, and a maximum computing capability of the UE 1 is insufficient to support computing capability required by the function A and function B.

Example 2: the configuration information includes: information of a minimum capability that the second node is required to support function A and information of a minimum capability that the second node is required to support function B (first information), activation time configuration information corresponding to a minimum capability required to be supported by the second node, and information of the function A and function B.

The information of the minimum capability required to be supported by the second node UE 1 includes a minimum value of a computing number that the second node is required to support for function A, for example N(A)_{Min}, and a minimum value of a computing number that the second node is required to support for function B, for example N(B)_{Min}, and the first function (i.e., the function required to be supported by the second node) includes function A and function B.

In a scenario, N(A)_{Min}+N(B)_{Min}>N(UE 1)_{Max}, where N(UE 1)_{Max} is a maximum capability supported by the second node itself, which is an example of the second capability. At this time, the second capability is less than the first capability, which satisfies the second trigger condition, indicating that the capability of the second node is incapable of supporting the capability indicated by the first node and required to be supported by the second node; at this time, the UE 1 may send the first information to the first node. Furthermore, the above first trigger condition is also satisfied, so the UE 1 may also report the second capability (that is, N(UE 1)_{Max}) to the first node.

The first information may include acknowledgement information for receiving the configuration information and the second indication information, where the second indication information is used to indicate at least one of: the UE 1 not supporting the first capability (i.e., N(A)_{Min} and N(B)_{Min}); the UE 1 being incapable of providing the first capability (i.e., N(A)_{Min} and N(B)_{Min}); the UE 1 being incapable of activating all or a part of function A and function B; the UE 1 not supporting all or a part of function A and function B. For example, the UE 1 is incapable of enabling the function A and function B within a time indicated by the "activation time configuration information corresponding to the minimum capability required to be supported by the UE 1" in the configuration information.

In another scenario, N(A)_{Min}+N(B)_{Min} >N(UE 1)_{Max}, and the first information further includes a reason why the second node does not support the first capability. Exemplarily, the UE 1 may send the first information to the first node. The first information may include acknowledgement information for receiving the configuration information and the second indication information, where the second indication information is used to indicate that the UE 1 is incapable of enabling the function A and function B within a time indicated by "activation time configuration information corresponding to a minimum capability required to be supported by the UE 1" in the configuration information, and a maximum computing capability of the UE 1 is insufficient to support computing capability required by the function A and function B.

In another example, a storage capability supported by the second node being less than a storage capability required to be supported by the second node, includes one of: a number of storage units of the second node being less than a number of storage units required to be supported by the second node; or a number of storage units of the second node being less than a sum of a number of storage units required to be supported by the second node and a second preset value.

In some embodiments, the number of storage units required to be provided by the second node is determined according to a minimum value of a number of storage units required for respective functions required to be supported by the second node.

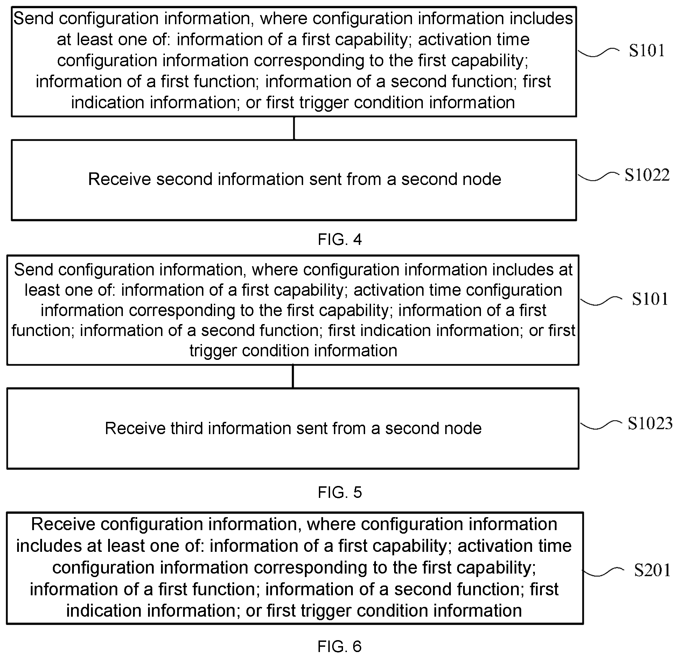

In another implementation, as shown in FIG. 4, the method may further include S1022.

In S1022, second information sent from the second node is received.

The second information includes at least one of: acknowledgement information for receiving the configuration information; or third indication information.

In some embodiments, the third indication information is used to indicate at least one of: the second node being capable of supporting a first capability; the second node being capable of providing the first capability; the second node being capable of activating a part or all of the first function; or the second node being supporting a part or all of the first function.

It can be understood that, in a case where the second node is capable of supporting the capability (that is, the first capability) that is indicated by the first node and required to be supported by the second node, the first information may be the feedback information sent from the second node to the first node regarding the configuration information, to inform the first node that the capability of the second node can satisfy the capability requirement. That is, in a case where the third trigger condition is satisfied, the second node determines that the self capability is capable of supporting the capability indicated by the first node and required to be supported by the second node, and thus, the second node sends the second information to the first node.

In some embodiments, a sending trigger condition of the second information may be referred to as a third trigger condition, where the third trigger condition includes at least one of: a second capability being greater than or equal to a third threshold; the second capability being greater than or equal to a first capability; the second node being capable of activating a first function; the second node being capable of supporting the first function; a capability required to be supported by the second node for activating the first function being less than a limitation of a capability of the second node.

The third threshold may be a reference threshold of a capability determined based on the first capability, and in a case that the second capability is greater than or equal to the third threshold, the second node may determine that the self capability (i.e., the second capability) is capable of satisfying a capability required to be supported by the second node.

In some embodiments, the second capability being greater than or equal to the first capability includes at least one of: a computing capability supported by the second node being greater than or equal to a computing capability required to be supported by the second node; or a storage capability supported by the second node being greater than or equal to a storage capability required to be supported by the second node.

In an example, the computing capability supported by the second node being greater than or equal to the computing capability required to be supported by the second node includes one of: a number of computing units of the second node being greater than or equal to a number of computing units required to be provided by the second node; or a number of computing units of the second node being greater than or equal to a sum of a number of computing units required to be provided by the second node and a first preset value.

Example 3: the configuration information includes: information of a minimum capability (first capability) required to be supported by the second node, activation time configuration information corresponding to the minimum capability required to be supported by the second node, and information of the first function.

The information of the minimum capability required to be supported by the second node UE 1 includes a minimum value of a computing number required to be supported by the second node (for example, N_{Min}); the first function (that is, a function required to be activated by the second node) includes function A and function B.

In a scenario, N_{Min}≤N(UE 1)_{Max}, where N(UE 1)_{Max} is a maximum capability supported by the second node itself, that is, an example of the second capability. At this time, the second capability is greater than or equal to the first capability, which satisfies a third trigger condition, indicating that a capability of the second node being capable of supporting a capability that is indicated by the first node and required to be supported by the second node, at this time, the UE 1 may send the second information to the first node.

The second information may include acknowledgement information for receiving the configuration information and third indication information, where the third indication information is used to indicate at least one of: the UE 1 being capable of supporting the first capability (i.e., N_{Min}); the UE 1 being capable of providing the first capability (i.e., N_{Min}); the UE 1 being capable of activating all or a part of function A and function B; or the UE 1 being capable of supporting all or a part of function A and function B. For example, the UE 1 is capable of enabling the function A and function B within a time indicated by the "activation time configuration information corresponding to the minimum capability required to be supported by the UE 1" in the configuration information.

In another scenario, N_{Min}+Delta1 ≤N(UE 1)_{Max}, where N(UE 1)_{Max} is the maximum capability supported by the second node itself, that is, an example of the second capability; a value of a sum of N_{Min} and Delta1 may be a third threshold; at this time, the second capability is greater than or equal to the third threshold, which satisfies the third trigger condition, indicating that the capability of the second node is capable of supporting the capability that is indicated by the first node and required to be supported by the second node; at this time, the UE 1 may send the second information to the first node.

Similarly, the second information may include acknowledgement information for receiving the configuration information and third indication information, where the third indication information is used to indicate at least one of: the UE 1 being capable of supporting the first capability (i.e., N_{Min}); the UE 1 being capable of providing the first capability (i.e., N_{Min}); the UE 1 being capable of activating all or a part of function A and function B; or the UE 1 being capable of supporting all or a part of function A and function B. For example, the UE 1 is capable of enabling the function A and function B within a time indicated by the "activation time configuration information corresponding to the minimum capability required to be supported by the UE 1" in the configuration information. The Delta1 may be configured by default or configured by a first node or configured by the UE 1.

Example 4: the configuration information includes: information of a minimum capability that the second node is required to support function A and information of a minimum capability that the second node is required to support function B (first information), activation time configuration information corresponding to a minimum capability required to be supported by the second node, and information of the function A and function B.

The information of the minimum capability required to be supported by the second node UE 1 includes a minimum value of a computing number that the second node is required to support for function A, for example N(A)_{Min}, and a minimum value of a computing number that the second node is required to support for function B (for example N(B)_{Min}), and the first function (i.e., the function required to be supported by the second node) includes function A and function B.

In a scenario, N(A)_{Min}+N(B)_{Min}≤N(UE 1)_{Max}, where N(UE 1)_{Max} is a maximum capability supported by the second node itself, which is an example of the second capability. At this time, the second capability is greater than or equal to the first capability, which satisfies a third trigger condition, indicating that a capability of the second node being capable of supporting a capability that is indicated by the first node and required to be supported by the second node, at this time, the UE 1 may send the second information to the first node.

The second information may include acknowledgement information for receiving the configuration information and third indication information, where the third indication information is used to indicate at least one of: UE 1 being capable of supporting the first capability (i.e., N(A)_{Min} and N(B)_{Min}); UE 1 being capable of providing the first capability (i.e., N(A)_{Min} and N(B)_{Min}); UE 1 being capable of activating all or a part of function A and function B; or UE 1 being capable of supporting all or a part of function A and function B. For example, the UE 1 is capable of enabling the function A and function B within a time indicated by the "activation time configuration information corresponding to the minimum capability required to be supported by the UE 1" in the configuration information.

In another scenario, N(A)_{Min}+N(B)_{Min} +Delta1≤N(UE 1)_{Max}, where N(UE 1)_{Max} is the maximum capability supported by the second node itself, that is, an example of the second capability; a value of a sum of N(A)_{Min}+N(B)_{Min} and Delta1 may be a third threshold; at this time, the second capability is greater than or equal to the third threshold, which satisfies the third trigger condition, indicating that the capability of the second node is capable of supporting the capability that is indicated by the first node and required to be supported by the second node; at this time, the UE 1 may send the second information to the first node.

Similarly, the second information may include acknowledgement information for receiving the configuration information and third indication information, where the third indication information is used to indicate at least one of: UE 1 being capable of supporting the first capability (i.e., N(A)_{Min} and N(B)_{Min}); UE 1 being capable of providing the first capability (i.e., N(A)_{Min} and N(B)_{Min}); UE 1 being capable of activating all or a part of function A and function B; or UE 1 being capable of supporting all or a part of function A and function B. For example, the UE 1 is capable of enabling the function A and function B within a time indicated by the "activation time configuration information corresponding to the minimum capability required to be supported by the UE 1" in the configuration information. The Delta1 may be configured by default or configured by a first node or configured by the UE 1.

Example 5: the configuration information includes: information of a minimum capability (first information) required to be supported by the second node, activation time configuration information corresponding to the minimum capability required to be supported by the second node, and information of the first function. Further, the third trigger condition includes that the second node may support a part of the first functions.

The first function (i.e., a function required to be activated by the second node) includes function A, function B, function C, and function D. The information of the minimum capability required to be supported by the second node UE 1, includes: a minimum value of a number of computing units required for supporting function A, for example, a value of N(A)_{Min}; a minimum value of a number of computing units required for supporting function B, for example, a value of N(B)_{Min}; a minimum value of a number of computing units required for supporting function C, for example, a value of N(C)_{Min}; a minimum value of a number of computing units required for supporting function D, for example, a value of N(D)_{Min}.

In a scenario, N(A)_{Min}+N(B)_{Min}+N(C)_{Min}+N(D)_{Min}>N(UE 1)_{Max}, and N(A)_{Min}+N(B)_{Min}+N(C)_{Min}≤N(UE 1_{)Max}. N(UE 1)_{Max} is a maximum capability supported by the second node itself, i.e., an example of the second capability. At this time, the second node is capable of supporting a part of the first functions (i.e., function A, function B, and function C), which satisfies the third trigger condition, and at this time, the UE 1 may send the second information to the first node.

The second information may include acknowledgement information for receiving the configuration information and third indication information, where the third indication information is used to indicate that the UE 1 is capable of enabling the function A, function B, and function C within a time indicated by "activation time configuration information corresponding to the minimum capability required to be supported by the UE 1" in the configuration information.

In another scenario, N(A)_{Min}+N(B)_{Min}+N(C)_{Min}+N(D)_{Min} > N(UE1)_{Max}, and N(A)_{Min}+N(B)_{Min}+N(C)_{Min}+N(E)_{Min}≤N(UE1)_{Max}. N(E)_{Min} is a minimum value of a number of computing units required for function E, and the function E may implement all or a part of functions of function D. At this time, the second node is capable of supporting a part of the first functions (i.e., function A, function B, and function C), which satisfies the third trigger condition, and at this time, the UE1 may send the second information to the first node.

The second information may include acknowledgement information for receiving the configuration information and third indication information, where the third indication information is used to indicate that the UE 1 is capable of enabling the function A, function B, and function C within a time indicated by "activation time configuration information corresponding to the minimum capability required to be supported by the UE 1" in the configuration information.

In an embodiment, function information of function E may also be sent to the first node. The "function information of function E" includes at least one of: a minimum value of a number of computing units required for supporting function E, or functions implemented by the function E.

In yet another implementation, as shown in FIG. 5, the method may further include S1023.

In S1023, third information sent from the second node is received.

The third information includes at least one of: acknowledgement information for the configuration information; activation time configuration information corresponding to capability information that is supported by the second node and required to be the second node; information of an updated activated function of the second node; or
information of an updated deactivated function of the second node.

In some embodiments, a sending trigger condition for the third information may be referred to as a fourth trigger condition, where the fourth trigger condition includes one of: the second capability being less than the first capability; or within an activation time configured by the activation time configuration information corresponding to the first capability, the second node being incapable of providing a capability satisfying the first capability.

Example 6: the configuration information includes: information of a minimum capability (first information) required to be supported by the second node, activation time configuration information corresponding to the minimum capability required to be supported by the second node, and information of the first function.

The first function (i.e., a function required to be activated by the second node) includes function A, function B, function C, and function D. The information of the minimum capability required to be supported by the second node UE 1, includes: a minimum value of a number of computing units required for supporting function A, for example, a value of N(A)_{Min}; a minimum value of a number of computing units required for supporting function B, for example, a value of N(B)_{Min}; a minimum value of a number of computing units required for supporting function C, for example, a value of N(C)_{Min}; a minimum value of a number of computing units required for supporting function D, for example, a value of N(D)_{Min}.

In a scenario, N(A)_{Min}+N(B)_{Min}+N(C)_{Min} ≤ N(UE 1)_{Max}. N(UE 1)_{Max} is a maximum capability supported by the second node itself, i.e., an example of the second capability. However, at this time, within a time indicated by "enabling time configuration information corresponding to the capability required to be supported by the UE 1", there are some other functions required to occupy certain computing capability, for example, function E is required to occupy at least N(E)_{Min} numbers of computing units, which results in an inability to simultaneously support function A, function B, function C, and function D within the time. That is, the above fourth trigger condition is satisfied.

Thus, the UE 1 may send third information to the first node. Exemplarily, the UE 1 selects a new time for enabling the function A, function B, function C, and function D, and then sends response information for the first configuration information (i.e., third information) to the first node. For example, the UE 1 selects a new time for enabling the function A, function B, function C, and function D. Then, UE 1 sends the response information for the first configuration information (i.e., third information) to a base station, confirming that the UE 1 successfully receives the configuration information. The third information may include: acknowledgement information for the configuration information, and activation time configuration information, also referred to as enabling time configuration information, corresponding to the function A, function B, function C, and function D.

Further, the first node, after receiving the third information sent from the UE 1, may also feedback new configuration information to the UE 1, where the new configuration information includes new capability information required to be supported by the UE1, determined based on the activation time configuration information corresponding to the function A, function B, function C, and function D in the third information.

Example 7: the configuration information includes: information of a minimum capability (first information) required to be supported by the second node, activation time configuration information corresponding to the minimum capability required to be supported by the second node, and information of the first function, and the above first trigger condition.

The first function (i.e., a function required to be activated by the second node) includes function A, function B, function C, and function D. The information of the minimum capability required to be supported by the second node UE 1, includes: a minimum value of a number of computing units required for supporting function A, for example, a value of N(A)_{Min}; a minimum value of a number of computing units required for supporting function B, for example, a value of N(B)_{Min}; a minimum value of a number of computing units required for supporting function C, for example, a value of N(C)_{Min}; a minimum value of a number of computing units required for supporting function D, for example, a value of N(D)_{Min}.

The first information is a minimum value of the number of computing units required to be supported by the UE 1, for example, N_{Min}. The second capability is a maximum capability required to be supported by the second node itself (for example, N(UE 1)_{Max}). And the first trigger condition includes N(UE1)_{Max}-N(A)_{Min}-N(B)_{Min}-N(C)_{Min}-N(D)_{Min} ≤ Delta2 (i.e., a second threshold). The Delta2 may be configured by default or configured by a base station or configured by the UE1.

The UE 1, after receiving the configuration information, in a case where N(UE1)_{Max}-N(A)_{Min}-N(B)_{Min}-N(C)_{Min}-N(D)_{Min}≤Delta2, satisfies the first trigger condition. The UE 1 may send self-supported capability information to the first node. The UE 1 may send the third information to the first node, where the third information includes: acknowledgement information for the configuration information, self capability information of the UE 1, function information of UE1 deactivation/disablement, and function information that requires the receiving end to be deactivated/disabled.

For example, in a case where N(UE1)_{Max}-N(A)_{Min}-N(B)_{Min}-N(C)_{Min}-N(D)_{Min}≤Delta2 and N(UE1)_{Max}-N(A)_{Min} -N(B)_{Min}-N(C)_{Min}≥Delta2, the above fourth trigger condition and the first trigger condition are satisfied, and the UE 1 may send the third information to the first node, where the third information includes: the acknowledgement information for the configuration information, the self capability information of the UE 1, and indication information of the function D.

Based on the technical solutions provided in the present disclosure, the configuration information sent from the first node may be determined based on the actual device requirements, service types, and radio channel environment, so that adaptive radio resource allocation may be performed based on the actual application scenario, to provide a reasonable radio resource allocation scheme. Thereby, the utilization efficiency of computing capability of the terminal may be improved, efficient radio resource allocation for the terminal may be implemented, and the spectral efficiency of the wireless communication system may be improved.

In some embodiments, the present disclosure also provides another configuration method, the method is applied to a receiving end device; as shown in FIG. 6, and the method includes: S201.

In S201, configuration information sent from a first node is received.

The configuration information includes at least one of: information of a first capability; activation time configuration information corresponding to the first capability; information of a first function; information of a second function; first indication information; or first trigger condition information.

The above first function is a function required to be activated by the second node, the second function is a function required to be deactivated by the second node, the first indication information is used to instruct the second node to report a second capability, and the first trigger condition information is used to trigger the second node to report the second capability. Exemplarily, the first node may send the configuration information to the second node. Correspondingly, the second node receives the configuration information.

In some embodiments, the first capability includes at least one of: a computing capability of the second node, a number of computing units of the second node, a storage capability of the second node or a number of storage units of the second node.

In some embodiments, the computing unit and/or the storage unit is determined based on one of: predefined, defined by the first node, defined by the second node, or defined through negotiation between the first node and the second node.

In some embodiments, the above function includes at least one of: a service type, an application scenario or a processing manner of a message.

In some embodiments, the processing manner of the message includes at least one of: a generation manner, a sending manner, a receiving manner, a manner for carrying information, a content for carrying information or a transmission configuration.

In some embodiments, the information of the first capability includes at least one of: information of a capability required to be supported by the second node; or
information of a capability required to be supported by the second node when the second node activates the first function.

In some embodiments, information of the second capability includes at least one of:
information of a capability possessed by the second node itself;
information of a capability supported by the second node itself;
information of a capability configured for the second node;
information of a minimum capability possessed by the second node itself;
information of a minimum capability supported by the second node itself;
information of a minimum capability configured for the second node;
information of a maximum capability possessed by the second node itself;
information of a maximum capability supported by the second node itself; or
information of a maximum capability configured for the second node.

In some embodiments, the activation time configuration information includes at least one of: an activation starting time, an activation deadline or an activation time period.

In some embodiments, the configuration information further includes at least one of:
information of a capability corresponding to the first function required to be supported by the second node;
activation time configuration information corresponding to the first function;
information of a capability corresponding to the second function required to be supported by the second node;
activation time configuration information corresponding to the second function; or
deactivation time configuration information corresponding to the second function.

In some embodiments, the deactivation time configuration information includes at least one of: a deactivation starting time, a deactivation deadline or a deactivation time period.

In some embodiments, the first trigger condition information includes at least one of:
the second capability being less than a first threshold;
the second node being incapable of activating a part or all of the first function;
the second capability being less than the first capability;
the second node not supporting a part or all of the first function;
capability information required to be supported by the second node for activating the first function exceeding a limitation of a capability of the second node; or
a difference between capability information supported by the second node and capability information required to be supported by the second node being less than a second threshold.

In an implementation, the second node may further send the first information to the first node.

The first information includes at least one of:
acknowledgement information for receiving the configuration information;
second indication information;

Herein, the second indication information is used to indicate at least one of:
the second node not supporting the first capability;
the second node being incapable of providing the first capability;
the second node being incapable of activating a part or all of the first function;
the second node not supporting a part or all of the first function.

In some embodiments, the sending trigger condition of the first information is a second trigger condition, and the second trigger condition includes at least one of:
the second capability being less than a third threshold;
the second capability being less than the first capability;
the second node being incapable of activating a part or all of the first function;
the second node not supporting a part or all of the first function; or
a capability required to be supported by the second node for activating the first function exceeding a limitation of a capability of the second node.

In some embodiments, the second capability being less than the first capability, includes at least one of:
a computing capability supported by the second node being less than a computing capability required to be supported by the second node; or
a storage capability supported by the second node being less than a storage capability required to be supported by the second node.

In some embodiments, the computing capability supported by the second node being less than the computing capability required to be supported by the second node, includes one of:
a number of computing units of the second node being less than a number of computing units required to be provided by the second node; or
a number of computing units of the second node being less than a number of computing units required to be provided by the second node and a first preset value.

In some embodiments, the number of computing units required to be provided by the second node is determined according to a minimum value of a number of computing units required for respective functions required to be supported by the second node.

In some embodiments, the storage capability supported by the second node being less than the storage capability required to be supported by the second node includes one of:
a number of storage units of the second node being less than a number of storage units required to be provided by the second node; or
a number of storage units of the second node being less than a number of storage units required to be provided by the second node and a second preset value.

In some embodiments, the number of storage units required to be provided by the second node is determined according to a minimum value of a number of storage units required for respective functions required to be supported by the second node.

In another implementation, the second node may further send second information to the first node.

The second information includes at least one of: acknowledgement information for receiving the configuration information; or third indication information.

The third indication information is used to indicate at least one of:
the second node being capable of supporting the first capability;
the second node being capable of providing the first capability;
the second node being capable of activating a part or all of the first function; or
the second node being capable of supporting a part or all of the first function.

In some embodiments, a sending trigger condition of the second information is a third trigger condition, and the third trigger condition includes at least one of:
the second capability being greater than or equal to a third threshold;
the second capability being greater than or equal to the first capability;
the second node being capable of activating the first function;
the second node being capable of supporting the first function; or
a capability required to be supported by the second node for activating the first function being less than a limitation of a capability of the second node.

In yet another implementation, the second node may also send third information to the first node.

The third information includes at least one of: acknowledgement information for the configuration information; activation time configuration information corresponding to capability information that is supported by the second node and required to be the second node; information of an updated activated function of the second node; or information of an updated deactivated function of the second node.

In some embodiments, a sending trigger condition of the third information is a fourth trigger condition, where the fourth trigger condition includes one of: the second capability being less than the first capability; or within an activation time configured by the activation time configuration information corresponding to the first capability, the second node being incapable of providing a capability satisfying the first capability.

Additionally, detailed descriptions regarding S201, reference may be made to relevant descriptions of the embodiments shown in FIG. 2 to FIG. 5, which will not be repeated herein.

The above introduces the solutions provided by the present disclosure mainly from the perspective of interaction between various nodes. It can be understood that, in order to implement the above functions, the various nodes, e.g., the apparatuses or devices, contain corresponding hardware structures and/or software modules for performing various functions. Those skilled in the art should easily realize that, in conjunction with the exemplary algorithm steps described in the embodiments disclosed herein, the present disclosure can be implemented in the form of hardware or a combination of hardware and computer software. Whether a certain function is performed by hardware or by computer software driving hardware, depends on a specific application and a design constraint condition of the technical solution. Professional technicians may use different methods to implement the described functions, for each specific application, but such an implementation should not be considered beyond the scope of the present disclosure.

In the embodiments of the present disclosure, the communication apparatus may be divided into functional modules according to the above-mentioned method embodiments, and for example, each functional module may be divided corresponding to each function, or two or more functions may also be integrated into one functional module. The above-mentioned integrated module may be implemented in the form of hardware or may also be implemented in the form of software. It should be noted that, the division of the modules in the embodiments of the present disclosure is schematic, which is only a logical functional division, and there may be other divisions in actual implementations. The example in which each functional module is divided corresponding to each function, is taken for explanation below.

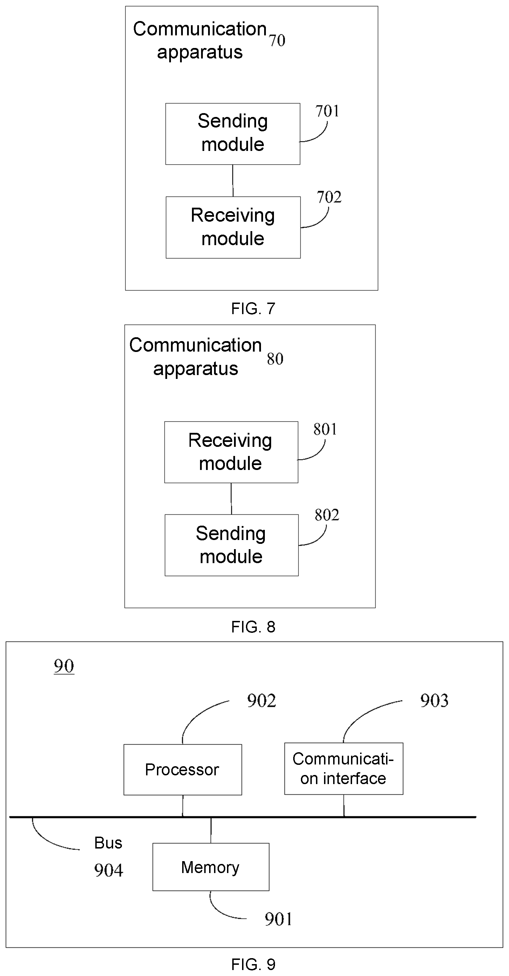

FIG. 7 illustrates a schematic diagram of components of a communication apparatus, provided in the embodiments of the present disclosure. As shown in FIG. 7, the communication apparatus 70 includes a sending module 701. In some embodiments, the communication apparatus 70 may further include a receiving module 702.

In some embodiments, the sending module 701, is configured to send configuration information. The configuration information includes at least one of: information of a first capability; activation time configuration information corresponding to the first capability; information of a first function, where the first function is a function required to be activated by a second node; information of a second function, where the second function is a function required to be deactivated by the second node; first indication information, where the first indication information is used to instruct the second node to report a second capability; first trigger condition information, where the first trigger condition information is used to trigger the second node to report the second capability.

In some embodiments, the first capability includes at least one of: a computing capability of the second node, a number of computing units of the second node, a storage capability of the second node or a number of storage units of the second node.

In some embodiments, the computing unit and/or the storage unit is determined based on one of: predefined, defined by the first node, defined by the second node, or defined through negotiation between the first node and the second node.

In some embodiments, the above function includes at least one of: a service type, an application scenario or a processing manner of a message.

In some embodiments, the processing manner of the message includes at least one of: a generation manner, a sending manner, a receiving manner, a manner for carrying information, a content for carrying information or a transmission configuration.

In some embodiments, the information of the first capability includes at least one of: information of a capability required to be supported by the second node; or information of a capability required to be supported by the second node when the second node activates the first function.

In some embodiments, the information of the second capability includes at least one of: information of a capability possessed by the second node itself; information of a capability supported by the second node itself; information of a capability configured for the second node; information of a minimum capability possessed by the second node itself; information of a minimum capability supported by the second node itself; information of a minimum capability configured for the second node; information of a maximum capability possessed by the second node itself; information of a maximum capability supported by the second node itself; or information of a maximum capability configured for the second node.

In some embodiments, the activation time configuration information includes at least one of: an activation starting time, an activation deadline or an activation time period.

In some embodiments, the configuration information further includes at least one of: information of a capability corresponding to the first function required to be supported by the second node; activation time configuration information corresponding to the first function; information of a capability corresponding to the second function required to be supported by the second node; activation time configuration information corresponding to the second function; or deactivation time configuration information corresponding to the second function.

In some embodiments, the deactivation time configuration information includes at least one of: a deactivation starting time, a deactivation deadline or a deactivation time period.

In some embodiments, the first trigger condition information includes at least one of: the second capability being less than a first threshold; the second node being incapable of activating a part or all of the first function; the second capability being less than the first capability; the second node not supporting a part or all of the first function; capability information required to be supported by the second node for activating the first function exceeding a limitation of a capability of the second node; or a difference between capability information supported by the second node and capability information required to be supported by the second node being less than a second threshold.

In some embodiments, the receiving module 702, is configured to receive first information sent from the second node; and the first information includes at least one of: acknowledgement information for receiving the configuration information; or second indication information.

The second indication information is used to indicate at least one of: the second node not supporting the first capability; the second node being incapable of providing the first capability; the second node being incapable of activating a part or all of the first function; or the second node not supporting a part or all of the first function.

In some embodiments, the sending trigger condition of the first information is a second trigger condition, and the second trigger condition includes at least one of: the second capability being less than a third threshold; the second capability being less than the first capability; the second node being incapable of activating a part or all of the first function; the second node not supporting a part or all of the first function; a capability required to be supported by the second node for activating the first function exceeding a capability limitation of the second node.

In some embodiments, the second capability being less than the first capability includes at least one of: a computing capability supported by the second node being less than a computing capability required to be supported by the second node; or a storage capability supported by the second node being less than a storage capability required to be supported by the second node.

In some embodiments, the computing capability supported by the second node being less than the computing capability required to be supported by the second node includes one of: a number of computing units of the second node being less than a number of computing units required to be provided by the second node; or a number of computing units of the second node being less than a sum of a number of computing units required to be provided by the second node and a first preset value.

In some embodiments, the storage capability supported by the second node being less than the storage capability required to be supported by the second node includes one of: a number of storage units of the second node being less than a number of storage units required to be provided by the second node; or a number of storage units of the second node being less than a sum of a number of storage units required to be provided by the second node and a second preset value.

In some embodiments, the number of storage units required to be provided by the second node is determined according to a minimum value of the number of storage units required for respective functions required to be supported by the second node.

In some embodiments, the receiving module 702, is further configured to receive second information sent from the second node; where the second information includes at least one of: acknowledgement information for receiving the configuration information; or third indication information.

The third indication information is used to indicate at least one of: the second node being capable of supporting a first capability; the second node being capable of providing the first capability; the second node being capable of activating a part or all of the first function; or the second node being supporting a part or all of the first function.

In some embodiments, a sending trigger condition of the second information is a third trigger condition, and the third trigger condition includes at least one of: the second capability being greater than or equal to a third threshold; the second capability being greater than or equal to the first capability; the second node being capable of activating the first function; the second node being capable of supporting the first function; or a capability required to be supported by the second node for activating the first function being less than a limitation of a capability of the second node.

In some embodiments, the receiving module 702, is further configured to receive third information sent from the second node.

The third information includes at least one of: acknowledgement information for the configuration information; activation time configuration information corresponding to capability information that is supported by the second node and that is required to be the second node; information of an updated activated function of the second node; or information of an updated deactivated function of the second node.

In some embodiments, a sending trigger condition of the third information is a fourth trigger condition, and the fourth trigger condition includes one of: the second capability being less than the first capability; within an activation time configured by the activation time configuration information corresponding to the first capability, the second node being incapable of providing a capability satisfying the first capability.

For more detailed descriptions of the above sending module 701 and the receiving module 702, and more detailed descriptions of various technical features therein, and descriptions of the beneficial effects, etc., references may be made to the above corresponding method embodiment sections, which will not be repeated herein.

FIG. 8 is a schematic diagram of components of a communication apparatus, provided in the embodiments of the present disclosure. As shown in FIG. 8, the communication apparatus 80 includes a receiving module 801. In some embodiments, the communication apparatus 80 may further include a sending module 802.

The receiving module 801, is configured to receive configuration information sent from a first node.

The configuration information includes at least one of: information of a first capability; activation time configuration information corresponding to the first capability; information of a first function, where the first function is a function required to be activated by a second node; information of a second function, where the second function is a function required to be deactivated by the second node; first indication information, where the first indication information is used to instruct the second node to report a second capability; first trigger condition information, where the first trigger condition information is used to trigger the second node to report the second capability.

In some embodiments, the first capability includes at least one of: a computing capability of the second node, a number of computing units of the second node, a storage capability of the second node or a number of storage units of the second node.

In some embodiments, the computing unit and/or the storage unit is determined based on one of: predefined, defined by the first node, defined by the second node, or defined through negotiation between the first node and the second node.

In some embodiments, the above function includes at least one of: a service type, an application scenario or a processing manner of a message.

In some embodiments, the processing manner of the message includes at least one of: a generation manner, a sending manner, a receiving manner, a manner for carrying information, a content for carrying information or a transmission configuration.

In some embodiments, the information of the first capability includes at least one of: information of a capability required to be supported by the second node; or information of a capability required to be supported by the second node when the second node activates the first function.

In some embodiments, the information of the second capability includes at least one of: information of a capability possessed by the second node itself; information of a capability supported by the second node itself; information of a capability configured for the second node; information of a minimum capability possessed by the second node itself; information of a minimum capability supported by the second node itself; information of a minimum capability configured for the second node; information of a maximum capability possessed by the second node itself; information of a maximum capability supported by the second node itself; or information of a maximum capability configured for the second node.

In some embodiments, the activation time configuration information includes at least one of: an activation starting time, an activation deadline or an activation time period.

In some embodiments, the configuration information further includes at least one of: information of a capability corresponding to the first function required to be supported by the second node; activation time configuration information corresponding to the first function; information of a capability corresponding to the second function required to be supported by the second node; activation time configuration information corresponding to the second function; or deactivation time configuration information corresponding to the second function.

In some embodiments, the deactivation time configuration information includes at least one of: a deactivation starting time, a deactivation deadline or a deactivation time period.

In some embodiments, the first trigger condition information includes at least one of: the second capability being less than a first threshold; the second node being incapable of activating a part or all of the first function; the second capability being less than the first capability; the second node not supporting a part or all of the first function; capability information required to be supported by the second node for activating the first function exceeding a limitation of a capability of the second node; or a difference between capability information supported by the second node and capability information required to be supported by the second node being less than a second threshold.

In a possible implementation, the sending module 802, is configured to send first information to the first node.

The first information includes at least one of: acknowledgement information for receiving the configuration information; or second indication information, where the second indication information is used to indicate at least one of: the second node not supporting the first capability; the second node being incapable of providing the first capability; the second node being incapable of activating a part or all of the first function; or the second node not supporting a part or all of the first function.

In some embodiments, the sending trigger condition of the first information is a second trigger condition, and the second trigger condition includes at least one of: the second capability being less than a third threshold; the second capability being less than the first capability; the second node being incapable of activating a part or all of the first function; the second node not supporting a part or all of the first function; a capability required to be supported by the second node for activating the first function exceeding a capability limitation of the second node.

In some embodiments, the second capability being less than the first capability includes at least one of: a computing capability supported by the second node being less than a computing capability required to be supported by the second node; or a storage capability supported by the second node being less than a storage capability required to be supported by the second node.

In some embodiments, the computing capability supported by the second node being less than the computing capability required to be supported by the second node includes one of: a number of computing units of the second node being less than a number of computing units required to be provided by the second node; or a number of computing units of the second node being less than a sum of a number of computing units required to be provided by the second node and a first preset value.

In some embodiments, the storage capability supported by the second node being less than the storage capability required to be supported by the second node includes one of: a number of storage units of the second node being less than a number of storage units required to be provided by the second node; or a number of storage units of the second node being less than a sum of a number of storage units required to be provided by the second node and a second preset value.

In some embodiments, the number of storage units required to be provided by the second node is determined according to a minimum value of a number of storage units required for respective functions required to be supported by the second node.

In another implementation, the sending module 802, is further configured to send second information to the first node.

The second information includes at least one of: acknowledgement information for receiving the configuration information; or third indication information. The third indication information is used to indicate at least one of: the second node being capable of supporting a first capability; the second node being capable of providing the first capability; the second node being capable of activating a part or all of the first function; or the second node being supporting a part or all of the first function.

In some embodiments, a sending trigger condition of the second information is a third trigger condition, and the third trigger condition includes at least one of: the second capability being greater than or equal to a third threshold; the second capability being greater than or equal to the first capability; the second node being capable of activating the first function; the second node being capable of supporting the first function; or a capability required to be supported by the second node for activating the first function being less than a limitation of a capability of the second node.

In yet another implementation, the sending module 802, is further configured to send third information to the first node.

The third information includes at least one of: acknowledgement information for the configuration information; activation time configuration information corresponding to capability information that is supported by the second node and that is required to be the second node; information of an updated activated function of the second node; or information of an updated deactivated function of the second node.

In some embodiments, a sending trigger condition of the third information is a fourth trigger condition, and the fourth trigger condition includes one of: the second capability being less than the first capability; within an activation time configured by the activation time configuration information corresponding to the first capability, the second node being incapable of providing a capability satisfying the first capability.

For more detailed descriptions of the above receiving module 801 and the sending module 802, and more detailed descriptions of various technical features therein, and descriptions of the beneficial effects, etc., references may be made to the above corresponding method embodiment sections, which will not be repeated herein.

It should be noted that, the modules in FIG. 7 and FIG. 8 may also be referred to as units, and for example, the processing module may be referred to as a processing unit. In addition, in the embodiments shown in FIG. 7 or FIG. 8, the names of the respective modules may not be the names shown in the figures, and for example, the sending module or the receiving module may also be referred to as a communication module.

If each unit in FIG. 7 or FIG. 8 is implemented in the form of a software functional module, and sold or used as a separate product, the unit may be stored in a computer readable storage medium. Based on this understanding, the technical solutions of the embodiments of the present disclosure may be essentially, or a part of the technical solutions that contributes to the existing technology, or all or a part of the technical solutions, may be embodied in the form of a software product, and the computer software product is stored in a storage medium, and includes a plurality of instructions to cause a computer device (which may be a personal computer, a server, or a network device, etc.) or processor to perform all or a part of the steps of the methods of various embodiments of the present disclosure. The storage medium storing the computer software product includes various types of medium capable of storing program codes, such as a U disk (USB flash disk), a mobile hard disk, a read-only memory (ROM), a random access memory (RAM), a magnetic disk, or an optical disk, etc.

In a case where the functions of the above integrated modules are implemented in the form of hardware, the embodiments of the present disclosure provide a structural schematic diagram of a communication apparatus. As shown in FIG. 9, the communication apparatus 90 includes: a processor 902, a communication interface 903, and a bus 904. In some embodiments, the communication apparatus 90 may also include a memory 901.

The processor 902 may implement or execute various illustrative logical blocks, modules and circuits described in conjunction with the contents of the present disclosure. The processor 902 may be a central processing unit, a general-purpose processor, a digital signal processor, an application specific integrated circuit, a field programmable gate array or other programmable logic devices, a transistor logic device, a hardware component or any combination thereof. The processor 902 may implement or execute various illustrative logical blocks, modules and circuits described in conjunction with the contents of the present disclosure. The processor 902 may also be a combination that implements the computing functions, for example, including a combination of one or more microprocessors, a combination of a digital signal processor (DSP) and a microprocessor, or the like.

The communication interface 903 is configured to connect with other devices via a communication network. The communication network may be an Ethernet, a radio access network, a wireless local area network (WLAN), or the like.

The memory 901 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 901 may exist independently of the processor 902, and the memory 901 may be connected to the processor 902 via the bus 904 and is used for storing instructions or program codes. The processor 902, when calling and executing the instructions or program codes stored in the memory 901, is capable of implementing the method provided in the embodiments of the present disclosure.

As another implementation, the memory 901 may also be integrated with the processor 902.

The bus 904 may be an extended industry standard architecture (EISA) bus or the like. Buses 904 may be divided into address buses, data buses, control buses, and the like. For the convenience of representation, only one thick line is used in FIG. 9 for representation, but it does not mean that there is only one bus or one type of bus.

From the description of the above implementations, those skilled in the art may clearly understand that, for convenience and brevity of description, the division of the above-mentioned various functional modules is illustrated only by way of an example, and in actual applications, the above-mentioned functions may be allocated to be completed by different functional modules as needed, that is, an internal structure of the device or apparatus is divided into different functional modules to complete all or a part of the functions mentioned above.

The embodiments of the present disclosure further provide a computer readable storage medium. All or a part of the procedures in the method embodiments mentioned above may be completed by related hardware indicated by computer instructions. The program may be stored in above-mentioned computer readable storage medium. The computer readable storage medium may be or a memory of any one of the foregoing embodiments. The above-mentioned computer readable storage medium may also be an external storage device of the device or apparatus mentioned above, e.g., a plug-in hard disk, a smart memory card (smart media card, SMC), a secure digital (SD) card, a flash card, etc., equipped on the device or apparatus mentioned above. Furthermore, the computer readable storage medium mentioned above may further include both an internal storage unit and an external storage device of the device or apparatus mentioned above. The computer readable storage medium mentioned above is used to store the computer program mentioned above, and other programs and data required for the device or apparatus mentioned above. The computer readable storage medium mentioned above may further be used to temporarily store data that has been output or is to be output.

The embodiments of the present disclosure provide a computer program product, the computer product contains a computer program, the computer program product, when executed on a computer, causes the computer to perform any one of the methods provided in the above embodiments.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with features and embodiments thereof, it is apparent that various modifications and combinations may be made thereto without departing from the spirit and scope of the present disclosure. Accordingly, the specification and drawings are merely exemplary explanations of the present disclosure as defined by the attached claims and are deemed to cover any and all modifications, variations, combinations or equivalents within the scope of the present disclosure. Obviously, those skilled in the art may make various modifications and variants to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations therein.

The above descriptions are only specific implementations of the present disclosure, but the protection scope of the present disclosure is not limited thereto, any variations or replacements within the technical scope disclosed in the present disclosure shall be included in the protection scope of the present disclosure. Therefore, the protection scope of the present disclosure shall be determined based on the protection scope of the claims.

## Claims

1. A configuration method, **characterized in that** the method is applied to a first node, and comprises:
sending configuration information;
wherein the configuration information comprises at least one of:
information of a first capability;
activation time configuration information corresponding to the first capability;
information of a first function, wherein the first function is a function required to be activated by a second node;
information of a second function, wherein the second function is a function required to be deactivated by the second node;
first indication information, wherein the first indication information is used to instruct the second node to report a second capability; or
first trigger condition information, wherein the first trigger condition information is used to trigger the second node to report the second capability.

2. The method according to claim 1, wherein the first capability comprises at least one of: a computing capability of the second node, a number of computing units of the second node, a storage capability of the second node or a number of storage units of the second node.

3. The method according to claim 2, wherein the computing unit and/or the storage unit is determined based on one of: predefined, defined by the first node, defined by the second node or defined through negotiation between the first node and the second node.

4. The method according to claim 1, wherein the function comprises at least one of: a service type, an application scenario or a processing manner of a message.

5. The method according to claim 4, wherein the processing manner of the message comprises at least one of: a generation manner, a sending manner, a receiving manner, a manner for carrying information, a content for carrying information, a transmission configuration.

6. The method according to claim 1, wherein the information of the first capability comprises at least one of:
information of a capability required to be supported by the second node; or
information of a capability required to be supported by the second node when the second node activates the first function.

7. The method according to claim 1, wherein the information of the second capability comprises at least one of:
information of a capability possessed by the second node itself;
information of a capability supported by the second node itself;
information of a capability configured for the second node;
information of a minimum capability possessed by the second node itself;
information of a minimum capability supported by the second node itself;
information of a minimum capability configured for the second node;
information of a maximum capability possessed by the second node itself;
information of a maximum capability supported by the second node itself; or
information of a maximum capability configured for the second node.

8. The method according to claim 1, wherein the activation time configuration information comprises at least one of: an activation starting time, an activation deadline or an activation time period.

9. The method according to claim 1, wherein the configuration information further comprises at least one of:
information of a capability corresponding to the first function required to be supported by the second node;
activation time configuration information corresponding to the first function;
information of a capability corresponding to the second function required to be supported by the second node;
activation time configuration information corresponding to the second function; or
deactivation time configuration information corresponding to the second function.

10. The method according to claim 9, wherein the deactivation time configuration information comprises at least one of: a deactivation starting time, a deactivation deadline or a deactivation time period.

11. The method according to claim 1, wherein the first trigger condition information comprises at least one of:
the second capability being less than a first threshold;
the second node being incapable of activating a part or all of the first function;
the second capability being less than the first capability;
the second node not supporting a part or all of the first function;
capability information required to be supported by the second node for activating the first function exceeding a limitation of a capability of the second node; or
a difference between capability information supported by the second node and capability information required to be supported by the second node being less than a second threshold.

12. The method according to claim 1, further comprising:
receiving first information sent from the second node; wherein the first information comprises at least one of:
acknowledgement information for receiving the configuration information; or
second indication information;
wherein the second indication information is used to indicate at least one of:
the second node not supporting the first capability;
the second node being incapable of providing the first capability;
the second node being incapable of activating a part or all of the first function; or
the second node not supporting a part or all of the first function.

13. The method according to claim 12, wherein a sending trigger condition of the first information is a second trigger condition, and the second trigger condition comprises at least one of:
the second capability being less than a third threshold;
the second capability being less than the first capability;
the second node being incapable of activating a part or all of the first function;
the second node not supporting a part or all of the first function; or
a capability required to be supported by the second node for activating the first function exceeding a limitation of a capability of the second node.

14. The method according to claim 13, wherein the second capability being less than the first capability comprises at least one of:
a computing capability supported by the second node being less than a computing capability required to be supported by the second node; or
a storage capability supported by the second node being less than a storage capability required to be supported by the second node.

15. The method according to claim 14, wherein the computing capability supported by the second node being less than the computing capability required to be supported by the second node, comprises one of:
a number of computing units of the second node being less than a number of computing units required to be provided by the second node; or
a number of computing units of the second node being less than a sum of a number of computing units required to be provided by the second node and a first preset value.

16. The method according to claim 14, wherein the storage capability supported by the second node being less than the storage capability required to be supported by the second node, comprises one of:
a number of storage units of the second node being less than a number of storage units required to be provided by the second node; or
a number of storage units of the second node being less than a sum of a number of storage units required to be provided by the second node and a second preset value.

17. The method according to claim 16, wherein the number of storage units required to be provided by the second node is determined according to a minimum value of the number of storage units required for respective functions required to be supported by the second node.

18. The method according to claim 1, further comprising:
receiving second information sent from the second node; wherein the second information comprises at least one of:
acknowledgement information for receiving the configuration information; or
third indication information;
wherein the third indication information is used to indicate at least one of:
the second node being capable of supporting the first capability;
the second node being capable of providing the first capability;
the second node being capable of activating a part or all of the first function; or
the second node being capable of supporting a part or all of the first function.

19. The method according to claim 18, wherein a sending trigger condition of the second information is a third trigger condition, and the third trigger condition comprises at least one of:
the second capability being greater than or equal to a third threshold;
the second capability being greater than or equal to the first capability;
the second node being capable of activating the first function;
the second node being capable of supporting the first function; or
a capability required to be supported by the second node for activating the first function being less than a limitation of a capability of the second node.

20. The method according to claim 1, further comprising:
receiving third information sent from the second node; wherein the third information comprises at least one of:
acknowledgement information for the configuration information;
activation time configuration information corresponding to capability information that is supported by the second node and that is required to be the second node;
information of an updated activated function of the second node; or
information of an updated deactivated function of the second node.

21. The method according to claim 20, wherein a sending trigger condition of the third information is a fourth trigger condition, and the fourth trigger condition comprises one of:
the second capability being less than the first capability; or
within an activation time configured by the activation time configuration information corresponding to the first capability, the second node being incapable of providing a capability satisfying the first capability.

22. A configuration method, **characterized in that** the method is applied to a second node, and comprises:
receiving configuration information sent from a first node;
wherein the configuration information comprises at least one of:
information of a first capability;
activation time configuration information corresponding to the first capability;
information of a first function, wherein the first function is a function required to be activated by the second node;
information of a second function, wherein the second function is a function required to be deactivated by the second node;
first indication information, wherein the first indication information is used to instruct the second node to report a second capability; or
first trigger condition information, wherein the first trigger condition information is used to trigger the second node to report the second capability.

23. The method according to claim 22, wherein the first capability comprises at least one of: a computing capability of the second node, a number of computing units of the second node, a storage capability of the second node or a number of storage units of the second node.

24. The method according to claim 22, wherein the function comprises at least one of: a service type, an application scenario or a processing manner of a message.

25. The method according to claim 22, wherein the information of the first capability comprises at least one of:
information of a capability required to be supported by the second node; or
information of a capability required to be supported by the second node when the second node activates the first function.

26. The method according to claim 22, wherein the activation time configuration information comprises at least one of: an activation starting time, an activation deadline or an activation time period.

27. The method according to claim 22, wherein the configuration information further comprises at least one of:
information of a capability corresponding to the first function required to be supported by the second node;
activation time configuration information corresponding to the first function;
information of a capability corresponding to the second function required to be supported by the second node;
activation time configuration information corresponding to the second function; or
deactivation time configuration information corresponding to the second function.

28. The method according to claim 22, wherein the trigger condition information comprises at least one of:
the second capability being less than a first threshold;
the second node being incapable of activating a part or all of the first function;
the second capability being less than the first capability;
the second node not supporting a part or all of the first function;
capability information required to be supported by the second node for activating the first function exceeding a limitation of a capability of the second node; or
a difference between capability information supported by the second node and capability information required to be supported by the second node being less than a second threshold.

29. The method according to claim 22, further comprising:
sending first information to the first node;
wherein the first information comprises at least one of:
acknowledgement information for receiving the configuration information; or
second indication information;
wherein the second indication information is used to indicate at least one of:
the second node not supporting the first capability;
the second node being incapable of providing the first capability;
the second node being incapable of activating a part or all of the first function; or
the second node not supporting a part or all of the first function.

30. The method according to claim 29, wherein
a sending trigger condition of the first information is a second trigger condition, and the second trigger condition comprises at least one of:
the second capability being less than a third threshold;
the second capability being less than the first capability;
the second node being incapable of activating a part or all of the first function;
the second node not supporting a part or all of the first function; or
a capability required to be supported by the second node for activating the first function exceeding a limitation of a capability of the second node.

31. A communication apparatus, **characterized by** comprising: a memory and a processor; wherein the memory is coupled with the processor; the memory is configured to store instructions executable by the processor; and the processor, upon executing the instructions, performs the method according to any one of claims 1 to 30.

32. A computer readable storage medium, **characterized in that** the computer readable storage medium has stored computer instructions thereon, and the computer instructions, upon being executed on a communication apparatus, enable the communication apparatus to perform the method according to any one of claims 1 to 30.
